Europäisches Patentamt

European Patent Office

Office européen des brevets

(11) Numéro de publication : **0 384 823 B1**

## (12) FASCICULE DE BREVET EUROPEEN

(45) Date de publication du fascicule du brevet :
**16.09.92 Bulletin 92/38**

(21) Numéro de dépôt : **90400454.6**

(22) Date de dépôt : **20.02.90**

(51) Int. Cl.$^5$ : **G01V 3/24**

---

(54) **Procédé et dispositif pour mesurer la resistivité des formations géologiques.**

---

(30) Priorité : **20.02.89 FR 8902158**

(43) Date de publication de la demande :
**29.08.90 Bulletin 90/35**

(45) Mention de la délivrance du brevet :
**16.09.92 Bulletin 92/38**

(84) Etats contractants désignés :
**AT DE DK ES FR GB GR IT NL SE**

(56) Documents cités :
**FR-A- 2 463 939**
**US-A- 3 136 942**
**US-A- 4 117 394**

(73) Titulaire : **SOCIETE DE PROSPECTION ELECTRIQUE SCHLUMBERGER**
**42, rue Saint-Dominique**
**F-75007 Paris (FR)**
㊷ **FR**

Titulaire : **SCHLUMBERGER LIMITED**
**277 Park Avenue**
**New York, N.Y. 10172 (US)**
㊷ **GB**
Titulaire : **SCHLUMBERGER TECHNOLOGY B.V.**
**Carnegielaan 12**
**NL-2517 KM Den Haag (NL)**
㊷ **DE DK ES IT AT**
Titulaire : **SCHLUMBERGER HOLDINGS LIMITED**
**P.O. Box 71, Craigmuir Chambers**
**Road Town, Tortola (VG)**
㊷ **GR NL SE**

(72) Inventeur : **Trouiller, Jean-Claude**
**3, rue Molière**
**F-78470 Saint-Rémy-lès-Chevreuse (FR)**
Inventeur : **Gounot, Marie-Thérèse**
**2, route de la Borde**
**F-78110 Le Vésinet (FR)**

(74) Mandataire : **Hagel, Francis et al**
**Etudes et Productions Schlumberger A**
**L'ATTENTION DU SERVICE BREVETS 26, rue de la Cavée B.P. 202**
**F-92142 Clamart Cédex (FR)**

EP 0 384 823 B1

Jouve, 18, rue Saint-Denis, 75001 PARIS

**Description**

L'invention se situe dans le domaine des diagraphies électriques. Elle concerne un procédé et un dispositif pour mesurer la résistivité des formations géologiques traversées par un sondage, et plus particulièrement la résistivité de la formation qui est relativement proche de la paroi du sondage, c'est-à-dire celle qui a été envahie par du filtrat de boue en cours de forage.

Lors des opérations de forage, on maintient généralement la pression hydrostatique induite par la colonne de boue remplissant le sondage, légèrement supérieure à la pression des formations souterraines. Ceci donne naissance à un phénomène connu depuis fort longtemps, à savoir une invasion de filtrat de boue dans la formation et un dépôt de gâteau de boue sur la paroi du sondage. En ce qui concerne ce phénomème, on pourra utilement se reporter à l'ouvrage de Oberto Serra intitulé "Diagraphies Différées - Bases de l'Interprétation" (Tome 1- Acquisition des Données Diagraphiques) - Bulletin des Centres de Recherches Exploration-Production Elf-Aquitaine - ou encore au brevet américain US-A-4,594,552.

La plupart des dispositifs connus, utilisés pour déterminer la résistivité Rxo de la zone envahie, comportent un organe de support allongé destiné à se déplacer dans le sondage, et un patin supporté par l'organe de support et destiné à être appliqué contre la paroi du sondage. La face du patin qui entre en contact avec la paroi du sondage est équipée d'un réseau d'électrodes.

En général, on distingue deux grandes familles : les dispositifs focalisés et les dispositifs non focalisés, c'est-à-dire ceux qui respectivement ont et n'ont pas un système de focalisation du courant de mesure. La famille des dispositifs focalisés inclut notamment le dispositif à focalisation microsphérique décrit dans le brevet US-A-3,798,535 et le dispositif à focalisation azimuthale décrit dans le brevet US-A-4,117,394.

Le patin décrit dans le brevet US-A-4,117,394 et dont une vue de face est reproduite à la figure 2 de la demande, est équipé d'un réseau d'électrodes linéaires qui sont sensiblement parallèles à l'axe longitudinal du sondage et qui sont espacées les unes des autres suivant une direction sensiblement perpendiculaire à cet axe. Ce réseau comprend une électrode centrale $A_0$ et trois paires d'électrodes $M_1$, $M_2$ et $A_1$ disposées symétriquement par rapport à l'électrode centrale $A_0$. L'électrode $A_0$ émet un courant d'analyse qui pénètre la formation en face du patin et retourne sur l'organe de support. Les lignes de courant d'analyse sont focalisées par un courant de focalisation qui est émis par la paire d'électrodes extérieures $A_1$ et dont l'intensité est constamment ajustée de manière à ce que la différence de potentiel observée entre les électrodes $M_1$ et $M_2$ appelées électrodes de contrôle soit sensiblement nulle. Ce système asservi a donc pour effet de concentrer les lignes de courant d'analyse dans un sens radial suivant une direction perpendiculaire à l'axe du sondage : on dit que c'est un système de focalisation actif par opposition au système de focalisation passif qui est basé uniquement sur des électrodes de garde.

S'il est vrai que l'arrangement décrit ci-dessus présente un avantage en ce qui concerne la taille de son patin par rapport au patin à focalisation microsphérique du brevet US-A-3,798,535, il n'en demeure pas moins que la mesure effectuée au moyen d'un tel patin se dégrade rapidement au fur et à mesure que l'épaisseur du gâteau de boue déposé sur la paroi du sondage augmente : pour une épaisseur de gâteau de boue d'environ 6 mm, l'erreur observée sur la mesure peut atteindre 50 %.

L'invention a donc pour objet un procédé et un dispositif de diagraphie qui réduit sensiblement les inconvénients évoqués ci-dessus et permet d'obtenir une mesure quantitative précise de la résistivité de la formation envahie par le filtrat de boue.

Le procédé de diagraphie selon l'invention sert à déterminer la résistivité électrique d'une formation souterraine traversée par un sondage à l'aide d'un patin de mesure conçu pour être appliqué contre la paroi du sondage et dont la face en contact avec la paroi du sondage est équipée d'un réseau d'électrodes. Le procédé comprend les étapes suivantes :

– émettre un courant d'analyse à partir d'une électrode centrale appartenant au réseau d'électrodes;

– recevoir le courant d'analyse en une zone située dans le sondage à l'arrière du patin;

– focaliser radialement le courant d'analyse suivant une première direction perpendiculaire ou parallèle à l'axe du sondage, au moyen d'un système de focalisation actif ;

– focaliser radialement le courant d'analyse suivant une seconde direction qui est perpendiculaire à ladite première direction, c'est-à-dire respectivement parallèle ou perpendiculaire à l'axe du sondage, au moyen d'un système de focalisation passif ;

– mesurer la valeur du courant d'analyse en vue de déterminer la résistivité de la formation.

De préférence, la focalisation du courant d'analyse au moyen d'un système de focalisation actif comprend :

– émettre un premier courant de focalisation à partir d'une paire d'électrodes de focalisation disposées symétriquement par rapport à l'électrode centrale selon la première direction ;

– ajuster l'intensité du premier courant de focalisation de manière à maintenir nulle la différence de potentiel entre une première et une seconde paire d'électrodes de contrôle, les électrodes de chaque paire d'électrodes de contrôle étant disposées symétriquement par rapport à l'électrode centrale selon ladite première direction, entre l'électrode centrale et la paire d'électrodes de focalisation.

De préférence, la focalisation du courant d'analyse au moyen d'un système de focalisation passif comprend :

– émettre un second courant de focalisation à partir d'au moins une électrode de garde disposée symétriquement par rapport à l'électrode centrale selon la seconde direction ;

– maintenir l'électrode centrale au potentiel de l'électrode de garde.

Selon une variante, le procédé selon l'invention comprend en outre les étapes suivantes :

– focaliser radialement le courant d'analyse suivant la première direction au moyen du système de focalisation passif;

– focaliser radialement le courant d'analyse suivant la seconde direction au moyen d'un second système de focalisation actif, indépendant du premier système de focalisation actif.

Le dispositif de diagraphie selon l'invention sert à déterminer la résistivité électrique d'une formation souterraine traversée par un sondage à l'aide d'un patin de mesure conçu pour être appliqué contre la paroi du sondage et dont la face en contact avec la paroi du sondage est équipée d'un réseau d'électrodes. Le dispositif comprend :

– une électrode centrale appartenant au réseau d'électrodes et adaptée à émettre un courant d'analyse,

– une électrode de retour pour recevoir le courant d'analyse en une zone située dans le sondage à l'arrière du patin;

– un système de focalisation actif adapté à focaliser radialement le courant d'analyse suivant une première direction perpendiculaire ou parallèle à l'axe du sondage ;

– un système de focalisation passif adapté à focaliser radialement le courant d'analyse suivant une seconde direction qui est perpendiculaire à ladite première direction, c'est-à-dire respectivement parallèle ou perpendiculaire à l'axe du sondage ;

– des moyens pour mesurer la valeur du courant d'analyse en vue de déterminer la résistivité de la formation.

De préférence, le système de focalisation actif comprend :

– une paire d'électrodes de focalisation disposées symétriquement par rapport à l'électrode centrale selon la première direction et adaptées à émettre un premier courant de focalisation ;

– des moyens pour ajuster l'intensité du premier courant de focalisation de manière à maintenir nulle la différence de potentiel entre une première et une seconde paire d'électrodes de contrôle, les électrodes de chaque paire d'électrodes de contrôle étant disposées symétriquement par rapport à l'électrode centrale selon la première direction, entre l'électrode centrale et la paire d'électrodes de focalisation.

De préférence, le système de focalisation passif comprend :

– au moins une électrode de garde disposée symétriquement par rapport à l'électrode centrale selon la seconde direction et adaptée à émettre un second courant de focalisation ;

– des moyens pour maintenir l'électrode centrale au potentiel de l'électrode de garde.

Selon les modes de réalisation envisagés, le système de focalisation passif comprend une ou deux électrodes de garde.

Lorsque le système de focalisation passif comprend deux électrodes de garde, chacune de ces électrodes peut être formée par une surface sensiblement rectangulaire ou polygonale en forme de T. Lorsqu'il ne comprend qu'une seule électrode de garde, cette dernière entoure complétement l'électrode centrale et peut être formée par une surface sensiblement rectangulaire ou polygonale en forme de I.

Selon le mode de réalisation préféré, les première et seconde directions sont respectivement perpendiculaire et parallèle à l'axe du sondage. L'électrode de garde est formée par une surface polygonale en forme de I dont les branches horizontales s'étendent de part et d'autre de la branche verticale d'une distance égale à celle qui existe entre l'électrode centrale et les électrodes de focalisation; en outre, l'éléctrode de garde et la paire d'électrodes de contrôle la plus proche de l'électrode centrale ne forment qu'une seule électrode.

Selon une variante du mode de réalisation préféré, plusieurs électrodes supplémentaires sensiblement identiques à l'électrode centrale sont disposées de manière espacée à l'intérieur de la surface polygonale formée par l'électrode de garde, selon l'une et/ou l'autre des directions. Chacune d'entre elles est maintenue au même potentiel que l'électrode de garde et émet un courant d'analyse supplémentaire dont on mesure l'intensité.

Selon une autre variante, chacune des électrodes de contrôle est composée d'une pluralité d'électrodes de contrôle alignées.

D'autres buts, aspects et caractéristiques de l'invention apparaîtront à la lecture de la description détaillée ci-après, faite en référence aux dessins annexés et dans lesquels :

– la figure 1 représente schématiquement un outil de diagraphie électrique suspendu dans un sondage et équipé d'un patin de mesure qui est appliqué contre la paroi du sondage;

– la figure 2 représente en vue de face un patin de l'art antérieur qui est équipé d'un réseau d'électrodes linéaires;

– les figures 3A, 3B, 3C et 3D représentent en vue de face différents modes de réalisation du patin selon l'invention;

– la figure 4 représente un schéma électrique associé au réseau d'électrodes pour les différents modes de réalisation des figures 3A, 3B, 3C et 3D ;

– la figure 5 représente en vue de face le mode de réalisation préféré du patin ;

– la figure 6 représente en perspective les lignes de courant et les surfaces équipotentielles associées à un quart du patin de la figure 5;

– la figure 7 représente un schéma électrique associé au réseau d'électrodes de la figure 5;

– la figure 8 représente une variante du mode de réalisation préféré; et

– les figures 9 et 10 représentent respectivement deux autres variantes.

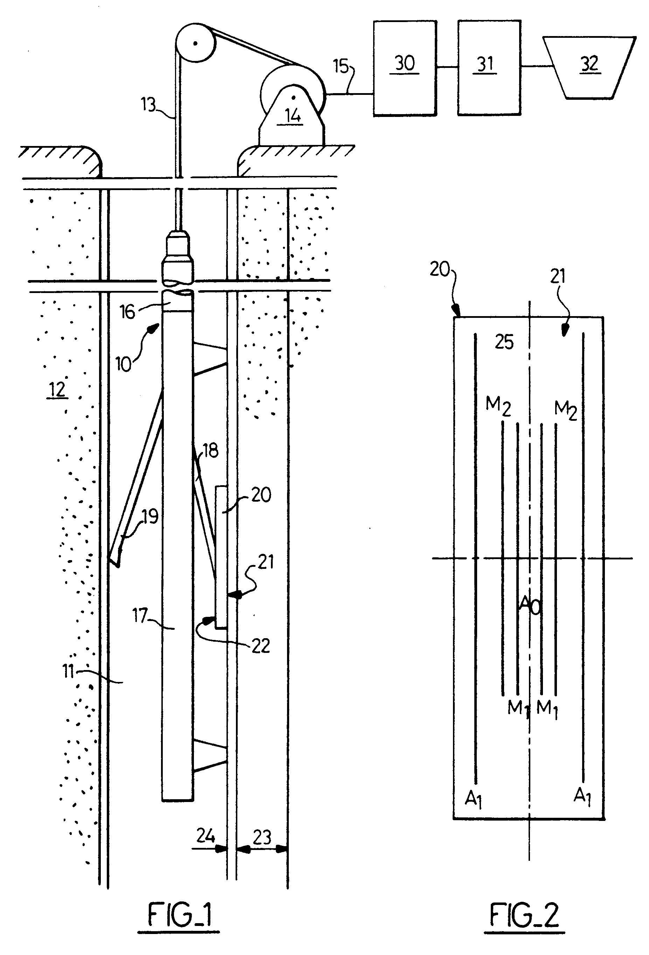

La figure 1 représente schématiquement un outil de diagraphie électrique 10 disposé dans un sondage 11 qui traverse les formations souterraines 12 et qui est rempli d'une boue de forage. On retrouve le gâteau de boue 24 et la zone envahie 23 évoqués ci-dessus. De manière connue, l'outil est suspendu à l'extrémité d'un cable multiconducteurs 13 qui vient s'enrouler sur un mécanisme de treuil 14, l'autre extrémité 15 du câble étant reliée à un équipement de surface. Ce dernier comprend de manière classsique des circuits 30 de commande et d'alimentation électrique destinés à l'outil 10, des circuits 31 d'acquisition et de traitement des données recueillies par l'outil 10, et des dispositifs 32 de visualisation des données.

En général, l'outil 10 comprend essentiellement deux parties:

– une cartouche électronique 16 destinée à commander le fonctionnement de l'outil, prétraiter les signaux de mesure et fournir une interface de télémétrie avec les circuits d'acquisition en surface ; et

– une sonde 17 comportant un bras rétractable 18 dont l'extrémité est équipée d'un patin de mesure 20 conçu pour être appliqué contre la paroi du sondage, ainsi qu'un contre-bras 19 ; on trouvera une description détaillée d'une telle sonde dans le brevet US-4,594,552.

Selon une variante, on pourrait également utiliser une sonde telle que celle qui est décrite dans le brevet US-A-4,614,250 et qui comporte quatre bras régulièrement distribués autour du corps de sonde, chacun des bras étant équipé d'un patin de mesure. L'avantage d'une telle sonde réside dans le fait qu'il est possible d'obtenir ainsi quatre mesures simultanées de la résistivité.

On ne reviendra pas sur la figure 2 qui a déjà été décrite ci-dessus en relation avec le document de l'art antérieur.

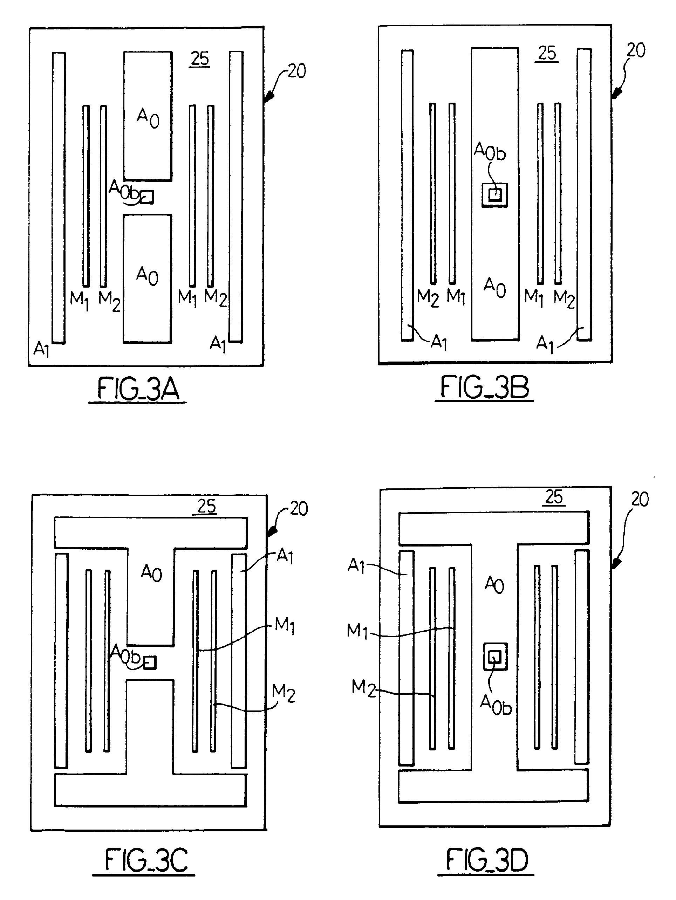

En référence aux figures 3A, 3B, 3C et 3D, la face 21 avant du patin selon l'invention est munie d'un réseau d'électrodes séparées les unes des autres par un matériau 25 qui est un isolant électrique.

Une électrode centrale $A_{0b}$ est adaptée à émettre un courant d'analyse $I_{0b}$ qui pénètre la formation avant de retourner sur une électrode de retour B située dans le sondage à l'arrière du patin; l'électrode de retour pourra par exemple être constituée par la face arrière du patin 22, le bras 18 qui supporte le patin et la partie de l'enveloppe extérieure de la sonde 17 qui est disposée à la hauteur du patin 20.

Conformément à l'invention, on focalise radialement le courant d'analyse $I_{0b}$ suivant :

– une première direction qui est perpendiculaire ou parallèle à l'axe du sondage, au moyen d'un système de focalisation actif, et

– suivant une seconde direction qui est perpendiculaire à la première direction, c'est-à-dire respectivement parallèle ou perpendiculaire à l'axe du sondage, au moyen d'un système de focalisation passif.

De préférence, la première direction est perpendiculaire à l'axe du sondage, et la seconde direction est parallèle à l'axe du sondage. Pour des raisons de simplicité, toute la description qui suit est basée sur cette orientation particulière, étant entendu qu'il suffit de faire subir au patin une rotation de 90° pour obtenir l'autre orientation.

D'une part, le système de focalisation actif, pourra par exemple être similaire à celui qui est décrit dans le brevet US-A-4,117,394 et qui correspond à un type de focalisation connu sous le sigle Latérolog 7. On pourrait également envisager un autre système de focalisation actif, par exemple celui connu sous le sigle Latérolog 8 ou encore Latérolog 9.

D'autre part, le système de focalisation passif est basé sur des électrodes de garde qui sont au même potentiel que l'électrode centrale.

Selon un premier mode de réalisation représenté sur la figure 3A, quatre paires d'électrodes $A_0$, $M_1$, $M_2$ et $A_1$ allongées, sensiblement parallèles à l'axe longitudinal du sondage, sont disposées symétriquement par rapport à l'électrode centrale $A_{0b}$. Les électrodes de chaque paire sont court-circuitées électriquement.

En s'éloignant de l'électrode centrale dans une direction parallèle à l'axe de l'outil, on trouve uniquement une électrode appelée électrode de garde $A_0$. En s'éloignant de l'électrode centrale dans une direction perpendiculaire à l'axe de l'outil, on rencontre successivement une première et une seconde électrodes, appelées respectivement électrodes de contrôle $M_1$ et $M_2$, et finalement, une troisième électrode appelée électrode de focalisation $A_1$.

D'une part, la paire d'électrodes $A_1$ est adaptée à émettre un courant $I_1$ de focalisation dont le retour est le même que celui pour le courant d'analyse $I_{0b}$ et qui est destiné à focaliser radialement le courant d'analyse $I_{0b}$ suivant une direction perpendiculaire à l'axe du sondage. L'intensité du courant $I_1$ est constamment ajustée de manière à maintenir la différence de potentiel entre les électrodes $M_1$ et $M_2$ sensiblement nulle.

D'autre part, l'électrode de garde $A_0$ est adaptée à émettre un courant $I_0$ de focalisation dont le retour est identique à celui des courants d'analyse $I_{0b}$ et de focalisation $I_1$. L'intensité du courant d'analyse $I_{0b}$ est ajustée de manière à ce que le potentiel de l'électrode centrale soit sensiblement égal à celui de l'électrode de garde $A_0$.

Selon un second mode de réalisation du patin représenté à la figure 3B, l'électrode de garde $A_0$ est formée par une électrode unique dont le contour extérieur forme un rectangle et dont le contour intérieur épouse sensiblement la forme de l'électrode centrale $A_{0b}$. Ainsi, l'électrode $A_0$ entoure complètement l'électrode centrale $A_{0b}$. Cette forme de l'électrode de garde $A_0$ est particulièrement intéressante dans la mesure où elle permet de créer une barrière aux courants de fuite issus de l'électrode centrale $A_{0b}$ qui auraient tendance à transiter latéralement vers la surface conductrice formée par les électrodes de contrôle $M_1$ et $M_2$.

Selon un troisième mode de réalisation représenté à la figure 3C, la paire d'électrodes de garde $A_0$ est formée par deux surfaces qui ont chacune la forme d'un polygone en T et qui sont symétriques par rapport à l'électrode centrale $A_{0b}$. Les pieds des T sont directement opposés à l'électrode centrale $A_{0b}$ et leurs branches horizontales s'étendent de part et d'autre de la branche verticale d'une distance au moins égale à celle qui existe entre l'électrode centrale $A_{0b}$ et la paire d'électrodes de contrôle $M_2$ la plus éloignée de l'électrode centrale. De préférence, les branches horizontales recouvrent également la paire d'électrodes extérieures $A_1$, c'est-à-dire que les branches horizontales s'étendent de part et d'autre de la branche principale d'une distance égale à celle qui existe entre l'électrode centrale $A_{0b}$ et la paire d'électrodes de focalisation $A_1$. Les branches horizontales de l'électrode de garde $A_0$ forment une barrière aux courants de fuite qui pourraient transiter longitudinalement sur la surface conductrice formée par les électrodes $M_1$, $M_2$ et $A_1$ pour atteindre le retour B.

La figure 3D représente un mode de réalisation encore plus élaboré qui résulte de la combinaison de ceux décrits en référence aux figures 3B et 3C. L'électrode de garde $A_0$ est formée par une électrode unique dont le contour extérieur forme un polygone en I et dont le contour intérieur épouse sensiblement la forme de l'électrode centrale $A_{0b}$. Les branches horizontales supérieures et inférieures du I s'étendent de part et d'autre de la branche principale d'une distance égale à celle qui existe entre l'électrode centrale $A_{0b}$ et la paire d'électrodes de focalisation $A_1$. Cette forme particulière de l'électrode de garde $A_0$ offre deux barrières aux courants de fuite issus de l'électrode $A_{0b}$ : une première barrière latérale entre d'une part $A_{0b}$ et d'autre part $M_1$, $M_2$ et $A_1$, et une seconde barrière entre d'une part l'extrémité des électrodes $M_1$, $M_2$ et A et d'autre part le retour B.

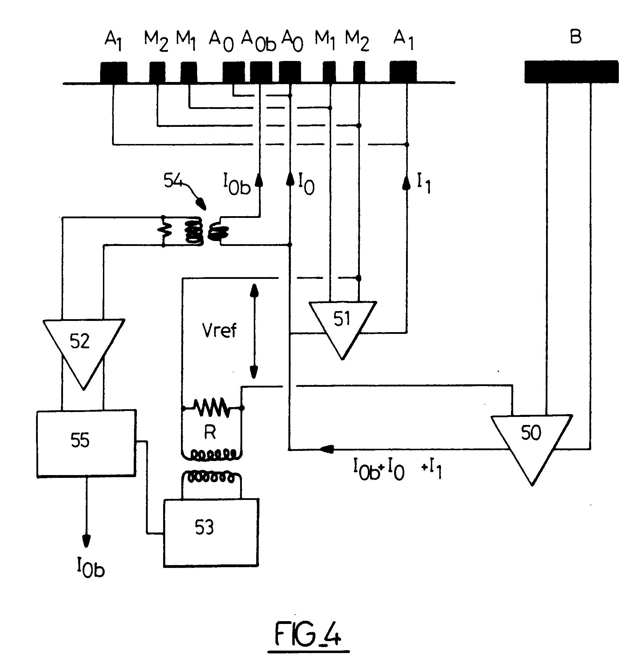

On décrira maintenant en référence à la figure 4, le circuit électrique associé à cette famille de réseaux. A titre illustratif, on a pris un patin 20 équipé du réseau d'électrodes de la figure 3D, le retour des courants se faisant sur une électrode B qui est constituée par la face arrière du patin 22, le bras 18 qui supporte le patin et la partie de l'enveloppe extérieure de la sonde 17. Comme mentionné précédemment, les électrodes de chaque paire sont court-circuitées électriquement.

Un oscillateur 53 dont la fréquence se trouve dans une plage allant de 500 Hz à 50 kHz délivre aux bornes de la résistance R une tension Vref qui définit la différence de potentiel à laquelle les électrodes $M_2$ et B doivent être maintenues. Un premier amplificateur 50 de courant délivre un courant total $I_t = I_{0b} + I_0 + I_1$ qui alimente respectivement l'électrode $A_{0b}$ avec un courant $I_{0b}$, l'électrode $A_0$ avec un courant $I_0$ et l'électrode $A_1$ avec un courant $I_1$. Le retour des courants $I_{0b}$, $I_0$ et $I_1$ est assuré par l'électrode B.

Un second amplificateur 51 de courant est chargé d'ajuster le courant $I_1$ de manière à ce que la différence de potentiel entre les électrodes de contrôle $M_1$ et $M_2$ reste nulle.

La dérivation qui alimente l'électrode $A_{0b}$ avec le courant $I_{0b}$ est branchée sur un transformateur de courant 54 de très faible impédance d'entrée qui assure un court-circuit presque parfait entre les électrodes $A_0$ et $A_{0b}$, de sorte que les électrodes $A_{0b}$ et $A_0$ sont au même potentiel. Le signal recueilli par le transformateur de courant 54 est ensuite amplifié par un amplificateur 52. Le signal ainsi amplifié est filtré par un détecteur 55 sensible à la phase qui est piloté par l'oscillateur 53 et qui délivre un signal représentatif de la valeur du courant $I_{0b}$.

La résistivité Rxo de la formation est donnée par la formule :

$$Rxo = K \, (Vref / I_{0b})$$

dans laquelle K est une constante que l'on détermine expérimentalement.

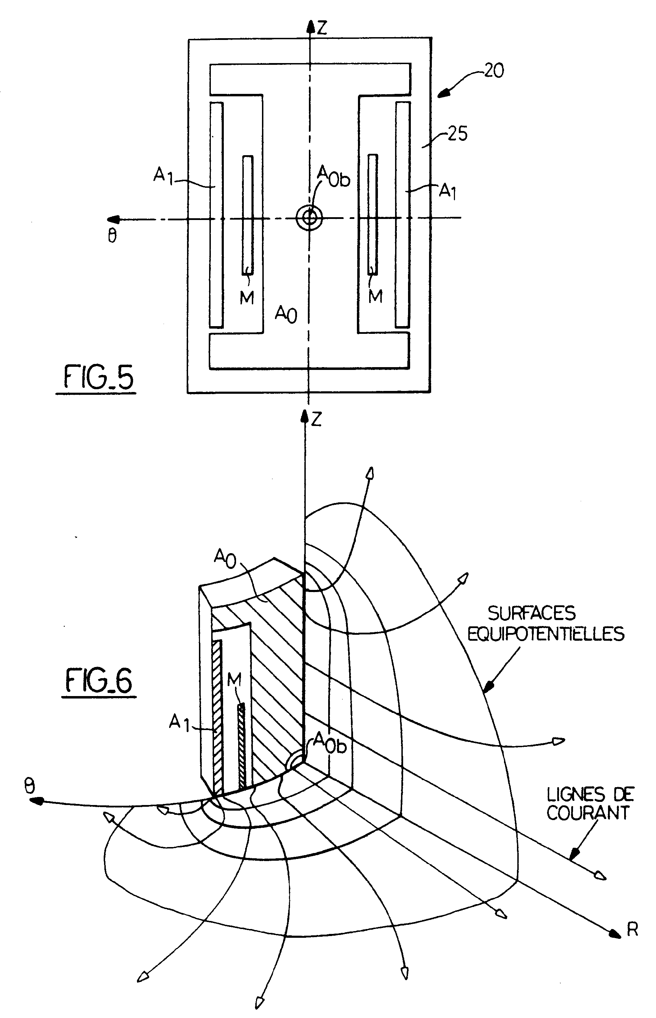

La figure 5 illustre le mode de réalisation préféré de l'invention. Selon ce mode, il n'y a qu'une seule électrode de garde qui entoure complètement l'électrode centrale $A_{0b}$. En outre l'électrode de garde et la première paire d'électrodes de contrôle ne forment plus qu'une seule électrode dénommée M ; cette dernière est formée par une surface polygonale en forme de I dont les branches horizontales s'étendent de part et d'autre de la branche verticale d'une distance égale à celle entre l'électrode centrale et une électrode de focalisation. Avec une électrode centrale $A_{0b}$ ayant une forme circulaire d'environ 5 mm de diamètre, on peut obtenir une profondeur d'investigation de l'ordre de 8 cm.

La figure 6 représente, pour le quart supérieur gauche du patin de la figure 5, les lignes de courant et les surfaces équipotentielles dans la formation à mesurer. On observera tout particulièrement que les lignes de courant issues de l'électrode centrale $A_{0b}$ sont rectilignes et perpendiculaires à la face du patin. En d'autres termes, la combinaison d'un système de focalisation actif avec un système de focalisation passif suivant deux directions perpendiculaires permet une focalisation radiale bien supérieure à celle obtenue avec les dispositifs de l'art antérieur.

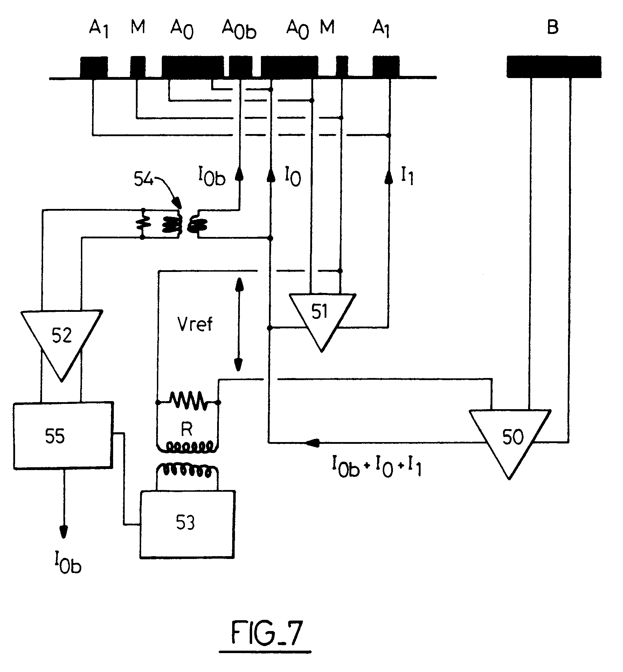

La figure 7 représente le circuit électrique associé au mode de réalisation préféré des figures 5 et 6. Il reprend essentiellement le circuit général de la figure 4 à la seule différence près que les paires d'électrodes de garde A0 et de contrôle M1 ont été remplacées par une seule électrode désignée M.

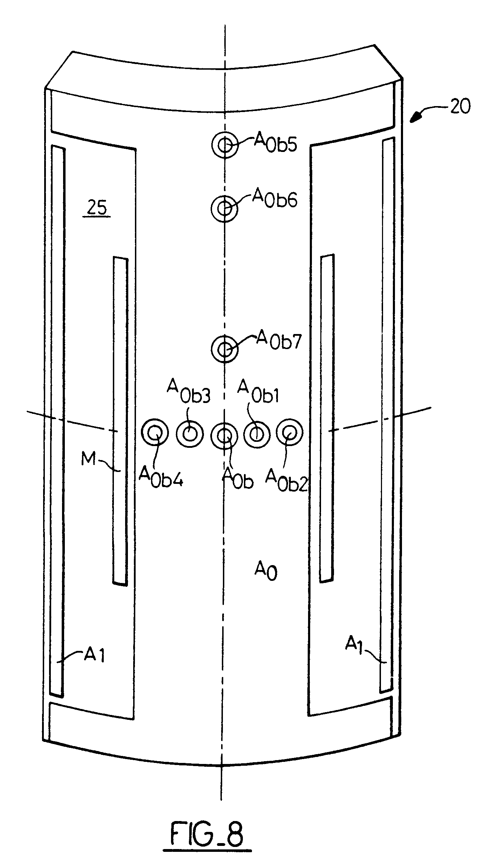

Selon une variante du mode de réalisation préféré qui est illustrée à la figure 8, le patin est en outre équipé d'électrodes supplémentaires $A_{0b1}$, $A_{0b2}$, $A_{0b3}$, ...., $A_{0b7}$ dont les dimensions sont sensiblement identiques à celles de l'électrode centrale. Ces électrodes supplémentaires sont disposées de manière espacée à l'intérieur de la surface polygonale en I formée par l'électrode de garde; elles sont alignées selon l'une et/ou l'autre direction.

Chacune de ces électrodes supplémentaires est reliée à un circuit identique à celui qui relie l'électrode centrale $A_{0b}$, c'est-à- dire que chacune émet un courant d'analyse supplémentaire correspondant à une mesure de résistivité supplémentaire.

Les électrodes supplémentaires $A_{0b1}$, .., $A_{0b5}$ alignées sur un axe perpendiculaire à l'axe du sondage permettent l'obtention d'une pluralité de mesures de résistivité ayant sensiblement la même profondeur d'investigation et pouvant éventuellement être combinées entre elles de manière à produire une image électrique quantitative de la paroi du sondage.

Les électrodes supplémentaires $A_{0b5}$, .., $A_{0b7}$ alignées sur un axe parallèle à l'axe du sondage permettent d'obtenir une pluralité de mesures de résistivité ayant une profondeur d'investigation décroissante au fur et à mesure que l'on s'éloigne de l'électrode centrale $A_{0b}$ et pouvant éventuellement servir à corriger la mesure du courant d'analyse $I_{0b}$ lorsque l'épaisseur du gâteau de boue devient trop importante.

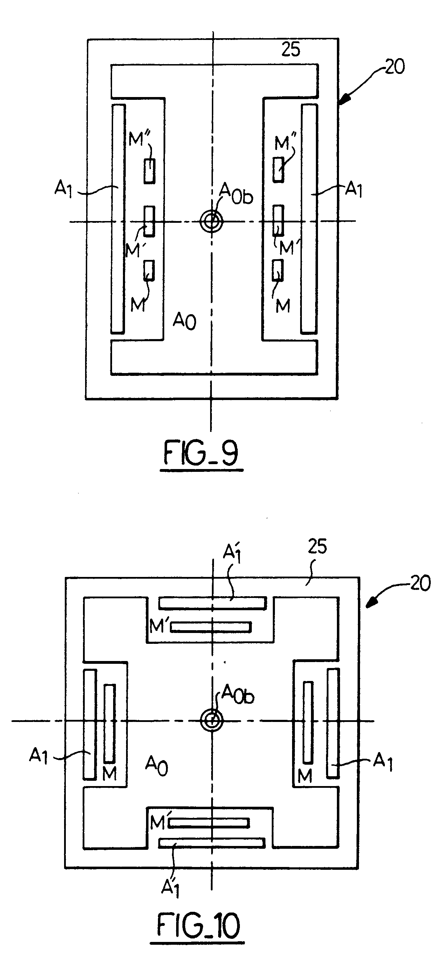

Selon une autre variante illustrée à la figure 9, il est envisageable de décomposer chacune des électrodes de contrôle M en une pluralité d'électrodes de contrôle M′, M″ et M‴ alignées ; selon cette variante, on pourra par exemple prendre la moyenne des potentiels mesurés sur les trois électrodes M′, M″ et M‴ comme le potentiel de l'électrode de contrôle M.

Une dernière variante illustrée à la figure 10 résulte de la superposition théorique de deux patins, l'un des patins ayant subi une rotation de 90° par rapport à l'autre. En d'autres termes, il est possible de focaliser le courant d'analyse $I_{0b}$ radialement suivant :
– les première et seconde directions au moyen du système de focalisation passif en augmentant la dimension de l'électrode de garde $A_0$ prise selon la première direction, et
– les première et seconde directions au moyen de deux systèmes de focalisation actifs sensiblement identiques, mais indépendants l'un de l'autre en ce qui concerne les courants de focalisation respectifs.

Selon cette variante, l'électrode de garde $A_0$ est formée par une surface polygonale dont l'allure générale est sensiblement carrée, chacun des côtés du carré présentant un ajour à l'intérieur duquel se trouve une électrode de contrôle et une électrode de focalisation. Le premier système de focalisation actif est composé des électrodes de contrôle M et des électrodes de focalisation $A_1$, tandis que le second système de focalisation actif est composé des électrodes de contrôle M′ et des électrodes de focalisation $A'_1$.

Le circuit électrique qui ajuste le courant de focalisation $I'_1$ émis par les électrodes $A'_1$ est identique à celui qui a été décrit en référence à la figure 7; cependant, il est indépendant du circuit qui ajuste le courant de focalisation $I_1$ émis par les électrodes $A_1$.

## Revendications

1. Procédé de diagraphie pour déterminer la résistivité électrique d'une formation souterraine traversée par un sondage à l'aide d'un patin de mesure conçu pour être appliqué contre la paroi du sondage, la face dudit patin en contact avec la paroi du sondage étant équipée d'un réseau d'électrodes, ledit procédé comprenant les étapes suivantes :
   – émettre un courant d'analyse à partir d'une électrode centrale dudit réseau d'électrodes;
   – recevoir ledit courant d'analyse en une zone située dans le sondage à l'arrière du patin;
   – focaliser radialement ledit courant d'analyse suivant une première direction perpendiculaire ou parallèle à l'axe du sondage, au moyen d'un système de focalisation actif ;
   – focaliser radialement ledit courant d'analyse suivant une seconde direction qui est perpendiculaire à ladite première direction, c'est-à-dire respectivement parallèle ou perpendiculaire à l'axe du sondage, au moyen d'un système de focalisation passif ;
   – mesurer la valeur du courant d'analyse en vue de déterminer la résistivité de la formation.

2. Procédé selon la revendication 1, caractérisé par le fait que l'étape consistant à focaliser ledit courant d'analyse au moyen d'un système de focalisation actif comprend :
   – émettre un premier courant de focalisation à partir d'une paire d'électrodes de focalisation disposées symétriquement par rapport à l'électrode centrale selon ladite première direction ;

– ajuster l'intensité du premier courant de focalisation de manière à maintenir nulle la différence de potentiel entre une première et une seconde paire d'électrodes de contrôle, les électrodes de chaque paire étant disposées symétriquement par rapport à l'électrode centrale selon ladite première direction, entre l'électrode centrale et la paire d'électrodes de focalisation.

3. Procédé selon l'une quelconque des revendications 1 à 2, caractérisé par le fait que l'étape consistant à focaliser ledit courant d'analyse au moyen d'un système de focalisation passif comprend :

– émettre un second courant de focalisation à partir d'au moins une électrode de garde disposée symétriquement par rapport à l'électrode centrale selon ladite seconde direction ;

– maintenir l'électrode centrale au potentiel de l'électrode de garde.

4. Procédé selon l'une quelconque des revendications 1 à 3, caractérisé par le fait que le système de focalisation passif comprend deux électrodes de garde.

5. Procédé selon la revendication 4, caractérisé par le fait que chacune des deux électrodes de garde est formée par une surface sensiblement rectangulaire.

6. Procédé selon la revendication 4, caractérisé par le fait que chacune des deux électrodes de garde est formée par une surface polygonale en forme de T.

7. Procédé selon la revendication 6, caractérisé par le fait que la branche horizontale de la surface polygonale en forme de T s'étend de part et d'autre de la branche verticale d'une distance égale à celle qui existe entre l'électrode centrale et les électrodes de focalisation.

8. Procédé selon l'une quelconque des revendications 1 à 3, caractérisé par le fait que le système de focalisation passif comprend une électrode de garde unique qui entoure complétement l'électrode centrale.

9. Procédé selon la revendication 8, caractérisé par le fait que l'électrode de garde unique est formée par une surface sensiblement rectangulaire.

10. Procédé selon la revendication 8, caractérisé par le fait que l'électrode de garde unique est formée par une surface polygonale en forme de I .

11. Procédé selon la revendication 10, caractérisé par le fait que les branches horizontales de la surface polygonale en forme de I s'étendent de part et d'autre de la branche verticale d'une distance égale à celle qui existe entre l'électrode centrale et les électrodes de focalisation.

12. Procédé selon l'une quelconque des revendications 9 à 11, caractérisé par le fait que l'électrode de garde et la paire d'électrodes de contrôle la plus proche de l'électrode centrale ne forment qu'une seule électrode.

13. Procédé selon l'une quelconque des revendications précédentes, caractérisé par le fait que lesdites première et seconde directions sont respectivement perpendiculaire et parallèle à l'axe du sondage.

14. Procédé selon l'une quelconque des revendications 1 à 3, caractérisé par le fait qu'il comprend en outre les étapes suivantes :

– focaliser radialement ledit courant d'analyse suivant ladite première direction au moyen du système de focalisation passif;

– focaliser radialement ledit courant d'analyse suivant ladite seconde direction au moyen d'un second système de focalisation actif indépendant du premier système de focalisation actif.

15. Procédé selon la revendication 14, caractérisé par le fait que l'étape consistant à focaliser ledit courant d'analyse au moyen d'un second système de focalisation actif comprend :

– émettre un troisième courant de focalisation à partir d'une seconde paire d'électrodes de focalisation disposées symétriquement par rapport à l'électrode centrale selon ladite seconde direction ;

– ajuster l'intensité du troisième courant de focalisation de manière à maintenir nulle la différence de potentiel entre une troisième et une quatrième paire d'électrodes de contrôle, les électrodes de chaque paire étant disposées symétriquement par rapport à l'électrode centrale selon ladite seconde direction, entre l'électrode centrale et la paire d'électrodes de focalisation.

16. Dispositif de diagraphie pour déterminer la résistivité électrique d'une formation souterraine traversée par un sondage (11) à l'aide d'un patin (20) de mesure conçu pour être appliqué contre la paroi du sondage, la face (21) dudit patin en contact avec la paroi du sondage étant équipée d'un réseau d'électrodes, ledit dispositif comprenant:

– une électrode centrale ($A_{0b}$) appartenant audit réseau d'électrodes et adaptée à émettre un courant d'analyse,

– une électrode de retour (17, 18, 22) pour recevoir ledit courant d'analyse en une zone située dans le sondage à l'arrière du patin;

– un système de focalisation actif ($M_1$, $M_2$, $A_1$) adapté à focaliser radialement ledit courant d'analyse suivant une première direction perpendiculaire ou parallèle à l'axe du sondage ;

– un système de focalisation passif ($A_0$) adapté à focaliser radialement ledit courant d'analyse suivant une seconde direction qui est perpendiculaire à ladite première direction, c'est-à-dire respectivement parallèle ou perpendiculaire à l'axe du sondage ;

– des moyens pour mesurer la valeur du courant d'analyse en vue de déterminer la résistivité de la formation.

17. Dispositif selon la revendication 16, caractérisé par le fait que le système de focalisation actif comprend :

– une paire d'électrodes de focalisation ($A_1$) disposées symétriquement par rapport à l'électrode centrale ($A_{0b}$) selon ladite première direction et adaptées à émettre un premier courant de focalisation ;

– des moyens (51) pour ajuster l'intensité du premier courant de focalisation de manière à maintenir nulle la différence de potentiel entre une première et une seconde paire d'électrodes de contrôle ($M_1$, $M_2$), les électrodes de chaque paire étant disposées symétriquement par rapport à l'électrode centrale selon ladite première direction, entre l'électrode centrale et la paire d'électrodes de focalisation.

18. Dispositif selon l'une des revendications 16 ou 17, caractérisé par le fait que le système de focalisation passif comprend:

– au moins une électrode de garde ($A_0$) disposée symétriquement par rapport à l'électrode centrale selon ladite seconde direction et adaptée à émettre un second courant de focalisation ;

– des moyens (54) pour maintenir l'électrode centrale au potentiel de l'électrode de garde.

19. Dispositif selon la revendication 18, caractérisé par le fait qu'il comprend deux électrodes de garde.

20. Dispositif selon la revendication 19, caractérisé par le fait que chacune des deux électrodes de garde est formée par une surface sensiblement rectangulaire.

21. Dispositif selon la revendication 19, caractérisé par la fait que chacune des deux électrodes de garde est formée par une surface polygonale en forme de T.

22. Dispositif selon la revendication 21, caractérisé par le fait que la branche horizontale de la surface polygonale en forme de T s'étend de part et d'autre de la branche verticale d'une distance égale à celle qui existe entre l'électrode centrale et les électrodes de focalisation.

23. Dispositif selon la revendication 18, caractérisé par le fait qu'il comprend une électrode de garde unique qui entoure complétement l'électrode centrale.

24. Dispositif selon la revendication 23, caractérisé par le fait que l'électrode de garde unique est formée par une surface sensiblement rectangulaire.

25. Dispositif selon la revendication 23, caractérisé par le fait que l'électrode de garde unique est formée par une surface polygonale en forme de I .

26. Dispositif selon la revendication 25, caractérisé par le fait que les branches horizontales de la surface polygonale en forme de I s'étendent de part et d'autre de la branche verticale d'une distance égale à celle qui existe entre l'électrode centrale et les électrodes de focalisation.

27. Dispositif selon l'une quelconque des revendications 23 à 26, caractérisé par le fait que l'électrode de garde et la paire d'électrodes de contrôle la plus proche de l'électrode centrale ne forment qu'une seule électrode (M).

28. Dispositif selon la revendication 27, caractérisé par le fait qu'il comprend en outre :

– des électrodes supplémentaires sensiblement identiques à l'électrode centrale et disposées de manière espacée à l'intérieur de la surface formée par l'électrode de garde selon l'une et/ou l'autre desdites directions ;

– des moyens pour émettre des courants d'analyse supplémentaires à partir de chacune desdites électrodes supplémentaires ;

– des moyens pour maintenir chacune desdites électrodes supplémentaires au même potentiel que l'électrode de garde; et

– des moyens pour mesurer l'intensité desdits courants d'analyse supplémentaires.

**29.** Dispositif selon l'une quelconque des revendications 16 à 28, caractérisé par le fait que lesdites première et seconde directions sont respectivement perpendiculaire et parallèle à l'axe du sondage.

**30.** Dispositif selon l'une quelconque des revendications 16 à 29, caractérisé par le fait que l'électrode centrale est formée par une surface circulaire d'environ 5 mm de diamètre.

**31.** Dispositif selon l'une quelconque des revendications 16 à 18, caractérisé par le fait qu'il comprend en outre un second système de focalisation actif (M', A'$_1$) indépendant de l'autre système de focalisation actif et adapté à focaliser radialement ledit courant d'analyse suivant ladite deuxième direction, et que le système de focalisation passif (A$_0$) est également adapté à focaliser radialement ledit courant d'analyse suivant ladite première direction.

**32.** Dispositif selon la revendication 25, caractérisé par le fait que chaque électrode de contrôle est composée d'une pluralité d'électrodes (M', M'', M''') alignées.

**Patentansprüche**

**1.** Diagraphieverfahren zum Bestimmen des elektrischen Widerstandes einer unter Tage liegenden Erdformation, die von einem Bohrloch durchteuft ist, mit Hilfe eines Meßschuhs, der an die Bohrlochwandung anlegbar ist, wobei die mit der Bohrlochwandung in Kontakt stehende Seite des Schuhs mit einem Elektrodennetz versehen ist, welches Verfahren die folgenden Schritte umfaßt:

Aussenden eines Analysestromes von einer zentralen Elektrode des Elektrodennetzes;

Empfangen des Analysestromes in einer Zone, die in dem Bohrloch hinter dem Schuh liegt;

radiales Fokalisieren des Analysestromes gemäß einer ersten Richtung senkrecht oder parallel zur Achse des Bohrlochs mittels eines aktiven Fokalisationssystems;

radiales Fokalisieren des Analysestromes gemäß einer zweiten Richtung, die senkrecht zur ersten Richtung ist, das heißt parallel beziehungsweise senkrecht zur Bohrlochachse mittels eines passiven Fokalisationssystems;

Messen des Wertes des Analysestromes zwecks Bestimmung des Widerstandes der Formation.

**2.** Verfahren nach Anspruch 1, dadurch gekennzeichnet, daß der Schritt des Fokalisierens des Analysestromes mittels eines aktiven Fokalisationssystems umfaßt:

Aussenden eines ersten Fokalisationsstromes von einem Paar von Fokalisationselektroden, die symmetrisch bezüglich der zentralen Elektrode gemäß der ersten Richtung angeordnet sind;

Einstellen der Intensität des ersten Fokalisationsstromes, derart, daß die Potentialdifferenz zwischen einem ersten und einem zweiten Paar von Steuerelektroden bei null gehalten wird, wobei die Elektroden jedes Paares symmetrisch bezüglich der zentralen Elektrode gemäß der ersten Richtung zwischen der zentralen Elektrode und dem Paar von Fokalisationselektroden angeordnet sind.

**3.** Verfahren nach einem der Ansprüche 1 bis 2, dadurch gekennzeichnet, daß der Schritt des Fokalisierens des Analysestromes mittels eines passiven Fokalisationssystems umfaßt:

Aussenden eines zweiten Fokalisationsstromes von mindestens einer Überwachungselektrode, die symmetrisch bezüglich der zentralen Elektrode gemäß der zweiten Richtung angeordnet ist;

Halten der zentralen Elektrode auf dem Potential der Überwachungselektrode.

**4.** Verfahren nach einem der Ansprüche 1 bis 3, dadurch gekennzeichnet, daß das passive Fokalisationssystem zwei Überwachungselektroden umfaßt.

**5.** Verfahren nach Anspruch 4, dadurch gekennzeichnet, daß jede der beiden Überwachungselektroden von einer im wesentlichen rechteckigen Oberfläche gebildet ist.

**6.** Verfahren nach Anspruch 4, dadurch gekennzeichnet, daß jede der beiden Überwachungselektroden von einer polygonalen T-förmigen Oberfläche gebildet ist.

**7.** Verfahren nach Anspruch 6, dadurch gekennzeichnet, daß der horizontale Zweig der polygonalen T-förmigen Oberfläche sich beidseits des vertikalen Zweiges um eine Distanz erstreckt gleich jener, die zwischen der zentralen Elektrode und den Fokalisationselektroden vorliegt.

**8.** Verfahren nach einem der Ansprüche 1 bis 3, dadurch gekennzeichnet, daß das passive Fokalisationssystem eine einzige Überwachungselektrode umfaßt, die die zentrale Elektrode vollständig umschließt.

9. Verfahren nach Anspruch 8, dadurch gekennzeichnet, daß die einzige Überwachungselektrode von einer im wesentlichen rechteckigen Oberfläche gebildet ist.

10. Verfahren nach Anspruch 8, dadurch gekennzeichnet, daß die einzige Überwachungselektrode von einer polygonalen Oberfläche in I-Form gebildet ist.

11. Verfahren nach Anspruch 10, dadurch gekennzeichnet, daß die horizontalen Zweige der polygonalen I-förmigen Oberfläche sich beidseits des vertikalen Zweiges um eine Distanz erstrecken, gleich jener, die zwischen der zentralen Elektrode und den Fokalisationselektroden vorliegt.

12. Verfahren nach einem der Ansprüche 9 bis 11, dadurch gekennzeichnet, daß die Überwachungselektrode und das Paar von Steuerelektroden, das der zentralen Elektrode am nächsten liegt, nur eine einzige Elektrode bilden.

13. Verfahren nach einem der vorangehenden Ansprüche, dadurch gekennzeichnet, daß die ersten beziehungsweise zweiten Richtungen senkrecht beziehungsweise parallel zur Achse des Bohrlochs liegen.

14. Verfahren nach einem der Ansprüche 1 bis 3, dadurch gekennzeichnet, daß es ferner die folgenden Schritte umfaßt:
radiales Fokalisieren des Analysestromes gemäß der ersten Richtung mittels des passiven Fokalisationssystems;
radiales Fokalisieren des Analysestromes gemäß der zweiten Richtung mittels eines zweiten aktiven Fokalisationssystems, das unabhängig von dem ersten aktiven Fokalisationssystem ist.

15. Verfahren nach Anspruch 14, dadurch gekennzeichnet, daß der Schritt des Fokalisierens des Analysestromes mittels eines zweiten aktiven Fokalisationssystems umfaßt:
Aussenden eines dritten Fokalisationsstromes von einem zweiten Paar von Fokalisationselektroden, die symmetrisch bezüglich der zentralen Elektrode gemäß der zweiten Richtung angeordnet sind;
Einstellen der Intensität des dritten Fokalisationsstromes derart, daß die Potentialdifferenz zwischen einem dritten und einem vierten Paar von Steuerelektroden bei null gehalten wird, wobei die Elektroden jedes Paares symmetrisch bezüglich der Zentralelektrode gemäß der zweiten Richtung zwischen der Zentralelektrode und dem Paar von Fokalisationselektroden angeordnet sind.

16. Diagraphievorrichtung zum Bestimmen des elektrischen Widerstandes einer unter Tage liegenden Formation, die von einem Bohrloch (11) durchteuft ist, mit Hilfe eines Meßschuhs (20), der an die Bohrlochwandung anlegbar ist, wobei die im Kontakt mit der Bohrlochwandung stehende Seite (21) des Meßschuhs mit einem Elektrodennetz versehen ist, welche Vorrichtung umfaßt:
eine zentrale Elektrode ($A_{0b}$), die zu dem Elektrodennetz gehört und ausgebildet ist zum Aussenden eines Analysestromes;
eine Rückkehrelektrode (17, 18, 22) zum Empfangen des Analysestromes in einer Zone, die in dem Bohrloch hinter dem Meßschuh liegt;
ein aktives Fokalisationssystem ($M_1$, $M_2$, $A_1$), ausgebildet zum radialen Fokalisieren des Analysestromes gemäß einer ersten Richtung, die senkrecht oder parallel zur Bohrlochachse verläuft;
ein passives Fokalisationssystem ($A_0$), ausgebildet zum radialen Fokalisieren des Analysestromes gemäß einer zweiten zur ersten Richtung senkrechten Richtung, das heißt parallel beziehungsweise senkrecht zur Bohrlochachse;
Mittel zum Messen des Wertes des Analysestromes für die Bestimmung des Widerstandes der Formation.

17. Vorrichtung nach Anspruch 16, dadurch gekennzeichnet, daß das aktive Fokalisationssystem umfaßt:
ein Paar von Fokalisationselektroden ($A_1$), die symmetrisch bezüglich der zentralen Elektrode ($A_{0b}$) gemäß der ersten Richtung angeordnet sind und ausgebildet sind zum Aussenden eines ersten Fokalisationsstromes;
Mittel (51) zum Einstellen der Intensität des ersten Fokalisationsstromes derart, daß die Potentialdifferenz zwischen einem ersten und einem zweiten Paar von Steuerelektroden ($M_1$, $M_2$) bei null gehalten wird, wobei die Elektroden jedes Paares symmetrisch angeordnet sind bezüglich der zentralen Elektrode gemäß der ersten Richtung zwischen der zentralen Elektrode und dem Paar von Fokalisationselektroden.

18. Vorrichtung nach einem der Ansprüche 16 oder 17, dadurch gekennzeichnet, daß das passive Fokalisationssystem umfaßt:
mindestens eine Überwachungselektrode ($A_0$), die symmetrisch bezüglich der zentralen Elektrode gemäß der zweiten Richtung angeordnet ist und ausgebildet ist zum Aussenden eines zweiten Fokalisationsstromes;

Mittel (54) zum Halten der zentralen Elektrode auf dem Potential der Überwachungselektrode.

19. Vorrichtung nach Anspruch 18, dadurch gekennzeichnet, daß sie zwei Überwachungselektroden umfaßt.

20. Vorrichtung nach Anspruch 19, dadurch gekennzeichnet, daß jede der beiden Überwachungselektroden von einer im wesentlichen rechteckigen Oberfläche gebildet ist.

21. Vorrichtung nach Anspruch 19, dadurch gekennzeichnet, daß jede der Überwachungselektroden von einer polygonalen T-förmigen Oberfläche gebildet ist.

22. Vorrichtung nach Anspruch 21, dadurch gekennzeichnet, daß der horizontale Zweig der polygonalen T-förmigen Oberfläche sich beidseits des vertikalen Zweiges um eine Distanz erstreckt, die gleich jener ist, welche zwischen der zentralen Elektrode und den Fokalisationselektroden vorliegt.

23. Vorrichtung nach Anspruch 18, dadurch gekennzeichnet, daß sie eine einzige Überwachungselektrode umfaßt, die vollständig die zentrale Elektrode umschließt.

24. Vorrichtung nach Anspruch 23, dadurch gekennzeichnet, daß die einzige Überwachungselektrode von einer im wesentlichen rechteckigen Oberfläche gebildet ist.

25. Vorrichtung nach Anspruch 23, dadurch gekennzeichnet, daß die einzige Überwachungselektrode von einer polygonalen I-förmigen Oberfläche gebildet ist.

26. Vorrichtung nach Anspruch 25, dadurch gekennzeichnet, daß die horizontalen Zweige der polygonalen I-förmigen Oberfläche sich beidseits des vertikalen Zweiges um eine Distanz erstrecken, gleich jener, die zwischen der zentralen Elektrode und den Fokalisationselektroden vorliegt.

27. Vorrichtung nach einem der Ansprüche 23 bis 26, dadurch gekennzeichnet, daß die Überwachungselektrode und das Paar von Steuerelektroden, das der zentralen Elektrode am nächsten liegt, nur eine einzige Elektrode (M) bilden.

28. Vorrichtung nach Anspruch 27, dadurch gekennzeichnet, daß sie ferner umfaßt:

zusätzliche Elektroden, die im wesentlichen identisch sind mit der zentralen Elektrode und beabstandet angeordnet sind bezüglich des Inneren der Oberfläche, die von den Überwachungselektroden gemäß der einen oder der anderen der Richtungen gebildet wird;

Mittel zum Aussenden zusätzlicher Analyseströme von jeder der zusätzlichen Elektroden;

Mittel zum Halten jeder zusätzlichen Elektrode auf demselben Potential wie die Überwachungselektrode, und

Mittel zum Messen der Intensität der zusätzlichen Analyseströme.

29. Vorrichtung nach einem der Ansprüche 16 bis 28, dadurch gekennzeichnet, daß die erste beziehungsweise zweite Richtung senkrecht beziehungsweise parallel zur Bohrlochachse verlaufen.

30. Vorrichtung nach einem der Ansprüche 16 bis 29, dadurch gekennzeichnet, daß die zentrale Elektrode von einer runden Oberfläche mit etwa 5 mm Durchmesser gebildet ist.

31. Vorrichtung nach einem der Ansprüche 16 bis 18, dadurch gekennzeichnet, daß sie ferner ein zweites aktives Fokalisationssystem ($M'$, $A'_1$) umfaßt, das unabhängig von dem anderen aktiven Fokalisationssystem ist und ausgebildet ist zum radialen Fokalisieren des Analysestromes gemäß der zweiten Richtung, und daß das passive Fokalisationssystem ($A_0$) ebenfalls ausgebildet ist zum radialen Fokalisieren des Analysestromes gemäß der ersten Richtung.

32. Vorrichtung nach Anspruch 25, dadurch gekennzeichnet, daß jede Steuerelektrode von einer Mehrzahl ausgefluchteter Elektroden ($M'$, $M''$, $M'''$) zusammengesetzt ist.

**Claims**

1. A logging method for determining the electrical resistivity of an earth formation through which a borehole passes, with the resistivity being determined by using a measuring pad designed to be pressed against the wall of the borehole, with the face of the pad which comes into contact with the wall of the borehole being fitted with a array of electrodes, the method comprising the following steps:

delivering a measuring current from a central electrode of said array of electrodes;

receiving said measuring current in a zone situated inside the borehole, behind the pad;

focusing said measuring current radially in a first direction perpendicular or parallel to the axis of the borehole by means of an active focusing system;

focusing said measuring current radially along a second direction which is perpendicular to said first direction, i.e. respectively parallel or perpendicular to the axis of the borehole, by means of a passive focusing system; and

measuring the value of the measuring current in order to determine the resistivity of the formation.

2. A method according to claim 1, characterized by the fact that the step consisting in focusing said measuring current by means of an active focusing system comprises:

delivering a first focusing current from a pair of focusing electrodes disposed symmetrically in said first direction about the central electrode; and

adjusting the value of the first focusing current so as to maintain the potential difference between a first and a second pair of monitor electrodes at zero, with the electrodes of each pair being disposed symmetrically along said first direction about the central electrode, between the central electrode and the pair of focusing electrodes.

3. A method according to any one of claims 1 to 2, characterized by the fact that the step consisting in focusing said measuring current by means of a passive focusing system comprises:

delivering a second focusing current from at least one guard electrode disposed symmetrically in said second direction about the central electrode; and

maintaining the central electrode at the potential of the guard electrode.

4. A method according to any one of claims 1 to 3, characterized by the fact that the passive focusing system comprises two guard electrodes.

5. A method according to claim 4, characterized by the fact that each of the two guard electrodes is constituted by a surface which is substantially rectangular.

6. A method according to claim 4, characterized by the fact that each of the two guard electrodes is constituted by a polygonal surface which is substantially T-shaped.

7. A method according to claim 6, characterized by the fact that the horizontal branch of the T-shaped polygonal surface extends on either side of the vertical branch thereof through a distance equal to the distance between the central electrode and the focusing electrodes.

8. A method according to any one of claims 1 to 3, characterized by the fact that the passive focusing system comprises a single guard electrode which completely surrounds the central electrode.

9. A method according to claim 8, characterized by the fact that the single guard electrode is constituted by a surface which is substantially rectangular.

10. A method according to claim 8, characterized by the fact that the single guard electrode is constituted by a polygonal surface which is I-shaped.

11. A method according to claim 10, characterized by the fact that the horizontal branches of the I-shaped polygonal surface extend on either side of the vertical branch thereof through a distance equal to the distance between the central electrode and the focusing electrodes.

12. A method according to any one of claims 9 to 11, characterized by the fact that the guard electrode and the pair of monitor electrodes closest to the central electrode are constituted by a single electrode.

13. A method according to any preceding claim, characterized by the fact that said first and second directions are respectively perpendicular and parallel to the axis of the borehole.

14. A method according to any one of claims 1 to 3, characterized by the fact that it further includes the following steps:

focusing said measuring current radially along said first direction by means of the passive focusing system; and

focusing said measuring current radially along said second direction by means of a second active focusing system independent from the first active focusing system.

15. A method according to claim 14, characterized by the fact that the step consisting in focusing said measuring current by means of a second active focusing system comprises:

delivering a third focusing current from a second pair of focusing electrodes disposed symmetrically in said second direction about the central electrode; and

adjusting the value of the third focusing current in such a manner as to maintain the potential difference between third and fourth pairs of monitor electrodes at zero, with the electrodes of each pair being disposed symmetrically in said second direction about the central electrode, between the central electrode and the pair of focusing electrodes.

16. Logging apparatus for determining the electrical resistivity of an earth formation through which a borehole (11) passes, with the resistivity being determined by using a measuring pad (20) designed to be pressed against the wall of the borehole, with the face (21) of the pad which comes into contact with the wall of the borehole being fitted with a array of electrodes, said apparatus comprising:

a central electrode ($A_{0b}$) belonging to said array of electrodes and suitable for delivering a measuring current;

a return electrode (17, 18, 22) for receiving said measuring current in a zone situated inside the borehole, behind the pad;

an active focusing system ($M_1$, $M_2$, $A_1$) suitable for focusing said measuring current radially along a first direction perpendicular or parallel to the axis of the borehole;

a passive focusing system ($A_0$) suitable for focusing said measuring current radially along a second direction which is perpendicular to said first direction, i.e. respectively parallel or perpendicular to the axis of the borehole; and

means for measuring the value of the measuring current in order to determine the resistivity of the formation.

17. Apparatus according to claim 13, characterized by the fact that the active focusing system comprises:

a pair of focusing electrodes ($A_1$) disposed symmetrically along said first direction about the central electrode ($A_{0b}$) and suitable for delivering a first focusing current; and

means (51) for adjusting the value of the first focusing current in such a manner as to maintain the potential difference between first and second pairs of monitor electrodes ($M_1$, $M_2$) at zero, the electrodes of each pair being disposed symmetrically along said first direction about the central electrode, between the central electrode and the pair of focusing electrodes.

18. Apparatus according to claim 13 or 17, characterized by the fact that the passive focusing system comprises:

at least one guard electrode ($A_0$) disposed symmetrically along said second direction about the central electrode and suitable for delivering a second focusing current; and

means (54) for maintaining the central electrode at the potential of the guard electrode.

19. Apparatus according to claim 18, characterized by the fact that it includes two guard electrodes.

20. Apparatus according to claim 19, characterized by the fact that each of the two guard electrodes is formed by a surface which is substantially rectangular.

21. Apparatus according to claim 19, characterized by the fact that each of the two guard electrodes is formed by a polygonal surface which is T-shaped.

22. Apparatus according to claim 21, characterized by the fact that the horizontal branch of the T-shaped polygonal surface extends on either side of the vertical branch thereof through a distance equal to the distance between the central electrode and the focusing electrodes.

23. Apparatus according to claim 18, characterized by the fact that it includes a single guard electrode which completely surrounds the central electrode.

24. Apparatus according to claim 23, characterized by the fact that the single guard electrode is formed by a surface which is substantially rectangular.

25. Apparatus according to claim 23, characterized by the fact that the single guard electrode is formed by a polygonal surface which is I-shaped.

26. Apparatus according to claim 25, characterized by the fact that the horizontal branches of the I-shaped polygonal surface extend on either side of the vertical branch through a distance equal to the distance between the central electrode and the focusing electrodes.

27. Apparatus according to any one of claims 23 to 26, characterized by the fact that the guard electrode and the pair of monitor electrodes closest to the central electrode are constituted by a single electrode (M).

28. Apparatus according to claim 27, characterized by the fact that it further comprises:

additional electrodes substantially identical-to the central electrode and disposed inside the surface formed by the guard electrode in spaced-apart manner along one and/or the other of said directions;

means for delivering additional measuring currents from each of said additional electrodes;

means for maintaining each of said additional electrodes at the same potential as the guard electrodes; and

means for measuring the values of said additional measuring currents.

29. Apparatus according to any one of claims 16 to 28, characterized by the fact that said first and second direction are respectively perpendicular and parallel to the axis of the borehole.

30. Apparatus according to any one of claims 16 to 29, characterized by the fact that the central electrode is formed by a circular surface which is about 5 mm in diameter.

31. Apparatus according to any one of claims 16 to 18, characterized by the fact that it further includes a second active focusing system $(M',A'_1)$ independent from the other active focusing system and suitable for focusing said measuring current radially along said second direction, and that the passive focusing system $(A_0)$ is also suitable for focusing said measuring current radially along said first direction.

32. Apparatus according to claim 25, characterized by the fact that each monitor electrode is constituted by a plurality of electrodes $(M', M'', M''')$ in alignment.

FIG_1

FIG_2

FIG_3A

FIG_3B

FIG_3C

FIG_3D

$$I_{0b} + I_0 + I_1$$

FIG 4

FIG.5

FIG.6

SURFACES
EQUIPOTENTIELLES

LIGNES DE
COURANT

FIG.7

FIG_8

FIG_9

FIG_10